# EUROPEAN PATENT APPLICATION

(11) **EP 3 091 746 A1**
(43) Date of publication of application: **09.11.2016**
(21) Application number: 15382226.7
(22) Date of filing: 04.05.2015
(51) Int. Cl.: H04N 21/222, H04N 21/2665, H04N 21/2347

(54) **HEADEND AND METHOD FOR AUTIO/VIDEO SIGNAL DISTRIBUTION, WITH IMPROVED RESOURCE CONFIGURATION AND MANAGEMENT**

(71) Applicant: Angel Iglesias, S.A., 20009 San Sebastian (ES)
(72) Inventor: Murugarren Monasterio, Juan, Luis, 20009 SAN SEBASTIÁN (Guipúzcoa) (ES); Garcia Fidalgo, Roberto, 20009 SAN SEBASTIÁN (Guipúzcoa) (ES); Rojo Álvarez, Álex, 20009 SAN SEBASTIÁN (Guipúzcoa) (ES)
(74) Representative: Carpintero Lopez, Francisco

(57) **Abstract**

The present invention relates to a configurable headend with a plurality of connectors for receiving multimedia input signals; an input module receiving said signals through an RF bus and offering at its output one signal for each of the multimedia services; a data bus connecting all the modules; a controller module configured for: identifying the services; showing a list in an interface; receiving a selection of services; determining the modules connected to the headend, detecting changes in availability of any connected module; dynamically modifying the configuration of the headend depending on changes in availability and indicating to each of the connected input modules the input signals to be acquired depending on changes in availability and on services selected by the user; detecting the resources available at the output of the headend; and sending to the output of the headend the multimedia services selected depending on the detected available resources; and a power bus providing power to all the modules of the headend.

## Description

### Technical Field of the Invention

The present invention applies in the technical sector of signal distribution, and more specifically in headend resource configuration and management for receiving, processing and distributing audio and/or video signals, for example, in communal systems with signal receiving means.

### Background of the Invention

Television headends are a key element in signal distribution networks and their placement in communal systems corresponds to the need for receiving, modulating, processing and distributing signals captured by usual receiving means, typically antennas.

There are normally several receiving means (terrestrial antennas, dish antennas...) configured for capturing different types of signals with different television services or channels. All these receiving means are connected to the television headend by means of wiring in order to perform the necessary processing and subsequent distribution.

A television headend therefore has access to the entire service offering that the receiving means can capture, but it is necessary to choose from this offering a selection of services to make up the service guide that will be distributed to customers. To that end, an installer configures the headend by physically manipulating its connections.

In the state of the art, headends typically have to be configured by an installer who has a great deal of knowledge about the network, services and frequencies, and wiring must be done module by module and each of the services must be tuned to the suitable frequencies. This method of performance requires considerable technical resources and knowledge, because they are time-consuming tasks, and furthermore, for any change in the configuration of the guide, it is necessary to use updated wiring plans in order to know the location and identify the cables and the path of each signal, and said wiring and reconfiguration must be done manually in the headend.

On the other hand, the solutions existing in the state of the art usually solve distribution problems by incorporating new hardware modules as configuration needs change, which inevitably results in a space problem and complicates the initial installation planning.

According to that described above, solutions known up until now in the state of the art allow the configuration of a headend, but it is a rather inflexible configuration and is quite complex because any change in the headend itself or the service guide requires the technical intervention of the installer, new wiring and sometimes the installation of additional hardware.

### Summary of the Invention

The present invention solves the aforementioned problems by offering a headend that automatically performs all the configuration tasks without the need for the intervention of an installer or additional wiring to attach or power modules, but rather it proposes a completely flexible and automatic configuration that allows a user to simply modify their service guide remotely and receive the chosen services located in the most optimal manner in their available channels.

To that end, a first aspect of the present invention relates to a configurable television headend receiving multimedia service signals at its input (for example, radio and/or television channels), captured by different receiving means available, such as, for example, terrestrial or dish antennas commonly found in any building, to then distribute the selected services by communal systems. The headend comprises:
- a plurality of connectors for receiving input signals directly from receiving means;
- at least one input module which receives, through a first RF (radiofrequency) bus, input signals provided by the plurality of connectors, demodulates said signals, converts them to digital format and offers at its output one signal for each of the multimedia services;
- a data bus connecting all the modules of the headend;
- a headend resource management controller module connected with the at least one input module by means of the data bus, including a processor configured for:
   ∘ extracting identification information about the multimedia services;
   ∘ showing a list of the identified multimedia services to a user by means of a user interface;
   ∘ receiving, through user interaction with the user interface, a selection of said multimedia services;
   ∘ determining the input modules connected in the headend and their availability;
   ∘ indicating to each of the connected input modules the input signals to be acquired depending on the availability of said modules and according to the multimedia services selected by the user;
   ∘ detecting changes in availability of any module connected to the headend;
   ∘ dynamically modifying the configuration of the headend depending on changes in availability detected and indicating to each of the connected input modules the input signals to be acquired depending on changes in availability;
   ∘ detecting the resources available at the output of the television headend;and
   ∘ sending to the output of the headend the multimedia services selected depending on the detected available resources;
- a power bus providing power to all the modules of the headend.

Advantageously, the user can thereby configure the desired service guide and the headend is automatically configured for acquiring and processing the corresponding input signals. Depending on the availability of channels at the output, the headend places the services chosen by the user managing the available space.

Additionally, the headend can comprise a security module connected with the input module through the data bus, for encrypting or decrypting signals corresponding to certain services received through the data bus, and where the processor of the controller module is furthermore configured for detecting the security modules connected in the headend and their changes in availability so as to command the sending of said signals to one security module or another depending on their availability

According to one of the embodiments, a security module can in turn contain a conditional access module (CAM).

Optionally and according to one of the embodiments of the invention, the headend comprises at least one output module connected to the data bus, where the at least one output module is configured for frequency-modulating and shifting the received signals depending on the detected resources available at the output of the headend by the controller module, and where the processor of the controller module is furthermore configured for detecting the output modules connected in the headend and their changes in availability so as to command the sending of signals coming from either the input modules or else from the security modules to one output module or another, depending on their availability, through the data bus. All the free channels available can thus be advantageously used. If there is a plurality of output modules, communication between them occurring through a second RF output bus is contemplated, and an RF combiner for combining the frequency-modulated and shifted signals in each of the output modules of the plurality of output modules is further contemplated to thus distribute a single signal to the output of the headend.

According to one of the implementation possibilities of the present invention, the headend having at least two output connectors for IP-type signals and one output connector for RF-type signals is contemplated.

Advantageously, the present invention contemplates that the initial power is provided by the power bus to all the modules in an orderly and stepped manner, module by module, thereby preventing several modules from starting up at the same time, which could cause voltage peaks that may damage the headend.

According to one of the embodiments of the present invention, the possibility that extracting identification information about each of the multimedia services furthermore comprises the processor of the controller module being configured for tuning and demodulating all the input signals received is contemplated.

According to one of the embodiments of the present invention, the incorporation of a tuning module in the headend that is configured for performing a frequency scan at the output of the headend is contemplated for detecting resources available at the output of the television headend. The free channels that can be used by the headend for placing new services are thereby obtained.

The present invention contemplates in one of its possible embodiments the possibility of the processor of the controller module being furthermore configured for detecting changes in availability of the rest of the modules and modifying the configuration of the headend according to said availability. If one module is removed or no longer works due to a breakdown, the controller automatically reconfigures the headend to continue offering the multimedia services selected using other available modules or acquiring other input signals.

According to a possible embodiment, the user interface of the present invention is a web configuration interface that allows a user to configure the television headend remotely. The installer therefore does not need to physically access the headend to perform such tasks, rather they can advantageously select a service guide remotely using said web configuration interface.

According to different embodiments of the invention, the input signals are terrestrial digital television or radio signals or satellite signals, signals over IP, cable signals or any other type or combination of signals with DVB-T, DVB-T2, DVB-C, DVB-S, DVB-S2, DVB-IP formats or any other format used for broadcasting multimedia signals.

According to a particular embodiment, the present invention contemplates at least two operating modes: RF or IP. The headend is configured for providing at its output at least one type of signal to be chosen from RF signals or IP signals.

A second aspect of the present invention relates to a method for configuring and managing television headend resources receiving multimedia service signals at its input (to be distributed in communal systems). Said method comprises the steps of:
a) receiving multimedia service signals;
b) tuning and demodulating the received signals for extracting identification information about the received multimedia services;
c) displaying a list containing all the identified multimedia services by means of a user interface;
d) a user selecting a subset of multimedia services from the list displayed by means of the user interface;
e) receiving the selection of services in a controller module;
f) determining the input modules connected in the headend and their availability;
g) sending from the controller module to each of the input modules connected by means of a data bus a command to acquire certain input signals depending on the availability of said modules and the services selected in step d);
h) detecting changes in availability of any module connected to the headend and dynamically modifying the configuration of the headend according to the changes in availability, indicating to each of the connected input modules the input signals to be acquired depending on changes in availability detected;
i) demodulating the acquired signals, converting them to digital format, and offering a signal for each of the multimedia services as output of the at least one input module;
j) detecting the resources available at the output of the television headend;
k) sending to the output of the headend the services selected depending on the detected available resources.

Additionally, the method of the present invention contemplates the possibility of detecting security modules connected in the headend, which encrypt/decrypt payment service signals, received through the data bus, and their changes in availability so as to command the sending of said signals through the data bus to one of the security modules depending on its availability.

For the RF operating mode, one of the possible embodiments of the invention contemplates the possibility of detecting output modules connected in the headend, and their changes in availability and commanding the sending of the signals coming from either the input modules or else from the security modules to one module or another, depending on their availability, through the data bus, and the possibility of frequency-modulating and shifting the acquired signals depending on the detected resources available at the output of the headend by the controller module, in the output modules, is furthermore contemplated.

Furthermore, the present invention can also comprise combining all the frequency-modulated and shifted signals to distribute a single signal to the output of the television headend.

Finally, the invention relates to a computer program comprising computer-executable instructions to implement the described method, when it is executed in a computer, a digital processor of the signal, an application-specific integrated circuit, a microprocessor, a microcontroller or any other form of programmable hardware. Said instructions can be stored in a digital data storage medium.

The following specification and attached drawings can be referred to for a more complete understanding of these and other aspects of the invention, as well as the objects and advantages thereof.

### Description of the Drawings

To complete the description that is being made and for the purpose of aiding to better understand the features of the invention according to an example of one of the embodiments thereof, a set of drawings is attached to said description as an integral part thereof, in which the following has been depicted in an illustrative and non-limiting manner:
Figure 1 shows a general diagram of a television headend according to one of the embodiments of the present invention.
Figure 2 shows an input module of the television headend according to one of the possible embodiments of the present invention.
Figure 3 shows an output module of the television headend according to one of the possible embodiments of the present invention.

### Detailed Description of the Invention

What is defined in this detailed description is provided to help fully understand the invention. Accordingly, people having average skills in the art will recognize that variations, changes and modifications in the embodiments described in the present specification are possible without departing from the scope of the invention. Furthermore, the description of functions and elements that are well known in the state of the arte is omitted for the sake of clarity and concision.

The embodiments of the invention can obviously be implemented be in a wide range of architectural platforms, protocols, devices and systems, so the designs and specific implementations described herein are provided only for illustrative and comprehension purposes, and never for limiting aspects of the invention.

The present invention discloses a headend and a method for receiving, processing and distributing audio/video signals, for example television signals, allowing the remote configuration (by means of an interface that is accessible for an installer) and existing resource management.

The signals that are received as a result of different receiving means, such as terrestrial or dish antennas, can contain multimedia services of different categories. These services are typically conventional television and radio channels, but there are other categories such as information services, which offer information independent from the audiovisual programming being broadcast at that time; services linked to programming, which complement the broadcast audiovisual programming with supplementary information; or transactional services, which offer the possibility of sending and receiving information in a customized and exclusive manner.

The present invention allows the user of the headend (the installer, operator, administrator and, in general terms, the person responsible for configuring the headend; in the rest of the text the term "installer" will be used to refer to said person) to easily configure (or reconfigure) the service guide by accessing a user interface from any computer and selecting the multimedia services they want to have available. The process is very simple, because the television headend detects and offers the entire service offering available and the installer therefore only has to select, from the user interface, the services they want to add to or remove from the guide. At no time is it necessary to physically access the headend to modify the wiring or to use specific prior technical knowledge about the system, such as the frequencies of each service, bandwidths or the distribution of services, for example, because the entire necessary internal configuration (for example, for the most optimal distribution of frequencies, rearrangement of services and, in general, for adapting to existing resources) is done automatically by the headend itself depending on the configuration desired by the installer and on an intelligent detection of the resources available (at the input, at the output and in the headend itself).

The television headend of the present invention can tune and demodulate the digital signal of any receiving means and change, among many other parameters, the frequency and level of output signals by managing resources in an intelligent manner. A single output combining all the services selected by the installer, converted to frequencies that are suitable for taking the frequency channels that are free, is offered at the output of the headend (in RF). The present invention thereby allows creating a customized and easily configurable TV network.

Additionally, the headend can process services with special features (for example, encrypted services, such as pay channels) and deliver them at the output as free or re-encrypted services (under DRM (digital rights management) supported by the display elements of the system). For example, in systems with television services such as hotels or hospitals, the available service guide can thereby be managed for the customers in a centralized manner. It allows making any modification quickly and easily by accessing the user interface, and the headend responds to the new selections of the installer, being automatically reconfigured.

The intelligent configuration done by the television headend primarily depends on the services selected by the installer. The services are provided by the different signals captured by the receiving means and are available in the system where the headend of the present invention is located.

Once the signals corresponding with the selected services are acquired, the headend manages automatically the digital processing of the signals to extract the services from all the signals, which can come from different sources and have different formats such as DVB-T, DVB-T2, DVB-C, DVB-S, DVB-S2 or any other format, to combine them in an output signal with all the selected services.

The television headend of the present invention can additionally optimize reception quality by means of supervision of the output signals. It can fine-tune the configuration depending on the detected quality and reorganize services, for example, to prevent interferences between them or to prevent signal loss due to the bandwidth limitations in some embodiments. The services selected by the installer can be remodulated and converted to higher or lower frequencies to increase their quality.

Likewise, in the event of any change due to installing or uninstalling a module, the headend itself (the controller) detects this and is accordingly reconfigured. So if, for example, an input module is eliminated either because it has been physically removed from the headend or because it no longer works due to some malfunction, the television headend is reconfigured in order to immediately acquire the same signals through a different input module (and that can be extrapolated to any type of module).

One of the embodiments of the present invention relates to a television headend (TV) with an outer casing, inside which there is included a plurality of functional modules interconnected to one another by different data lines or buses. In addition to a power bus or rail, common to all the modules, the data lines transporting communications between different modules comprise, according to one of the embodiments of the invention, a data bus, GigaE (in this case, it is assumed that communication through this bus uses the Gigabit-Ethernet protocol, but any type of data protocol can be used), for connecting the functional modules and allowing communication between them for sending both data signals corresponding to TV and radio services and control signals. Furthermore, there are additional input buses (18) and output buses (19) for transporting input and output signals, respectively.

The television headend receives as inputs signals coming from any of the available (audio/video) signal receiving means, such as terrestrial antennas or dish antennas, for example. Each of said signals is received by connectors (20) of the television headend, for example RF connectors or HDMI connectors, through a dedicated cable for each of them, and they can be terrestrial digital television or radio signals, satellite signals, signals over IP, cable signals or any other type of signal. The output of the television headend (in RF) comprises one output in which all the services chosen by the installer are combined in a single signal. To choose the services, the installer acts on the headend through a user interface which is accessible from any wired or wireless means for managing said interface and thereby performing configuration from any type of electronic device, such as a PC, a tablet, or a smartphone, for example.

According to one of the embodiments, the television headend of the present invention can work in two different modes (depending on how it is configured): IP output or radiofrequency (RF) output. The outputs of the headend are different for both modes, and according to one of the embodiments, can comprise a single connector (17) for the radiofrequency output and at least two connectors (15, 16) for IP outputs, for example RJ-45 connectors. Nevertheless, the particularities of both modes will be explained in detail below.

According to one of the embodiments of the present invention, the functional modules comprised in the television headend are input modules, security modules, output modules and a controller module (the exact number of modules of each type is a design option which will depend on a number of factors, such as the specific application, specific scenario, number and type of multimedia services, etc., but at the very least the headend must have at least one input module and one controller module). Furthermore, according to one of the embodiments of the invention, the headend has elements that are external to the rest of the functional modules and are designed to perform basic but necessary functions for operation, such as, for example, power tasks, basic signal conditioning, detection of connections in the inputs and outputs, connectors to buses, receiving RF signals and distributing them to modules, combining the output signals of the modules towards the output of the headend, providing physical connectivity to the grooves where the modules are inserted, and other similar tasks. The set of external elements herein referred to shall be called "base" throughout this description.

The input modules receive input signals through an RF input bus (18) and use as output the data bus connecting all the modules, which can be a GigaE type bus (2). According to one of the embodiments, each of the input modules can comprise at least two independent connectors S1, S2 (21, 22) for receiving at least two independent input signals. Said signals are available in the RF input bus and any of the input modules has access to them directly without the need for additional wiring, repeaters or splitters outside the headend.

Although the security modules can have other functions, they are primarily responsible for encryption/decryption tasks, for example, payment services often require some decryption processing, or for example, certain signals require encryption in order to be reencrypted under DRM (digital rights protection system) supported in the system in which the headend is located. Both the input coming from the input modules and the output heading towards the output modules are done through the data bus.

The output modules receive signals through the data bus, which can be a GigaE type bus; in contrast, they use the RF output bus (19) for the output.

The controller module is connected with the rest of the modules by means of the data bus, through which it transmits control commands necessary for configuring input modules, security modules and output modules, as needed, in order to provide at the output the services chosen by the installer. The controller furthermore detects the services existing at the input (to offer them to the installer), reconfigures the modules according to the resources existing at all times (for example, it is no longer available because of a failure or it is removed from the headend), directs traffic from one module to another for each of the services identified in the input signals (for example, if it is determined that a service has to be processed in the security module because it contains a payment service). The controller is also responsible for checking at the output which channels are free in order to manage resources and adapt the configuration to frequencies corresponding to the free channels. Additionally, the controller can also supervise the signal quality at the output of the television headend.

Communication of the modules through the data bus is performed, for example, using a TCP/IP protocol, where each of the modules is identified by the controller by means of an IP address assigned thereto depending on the port of the data bus to which said module is connected.

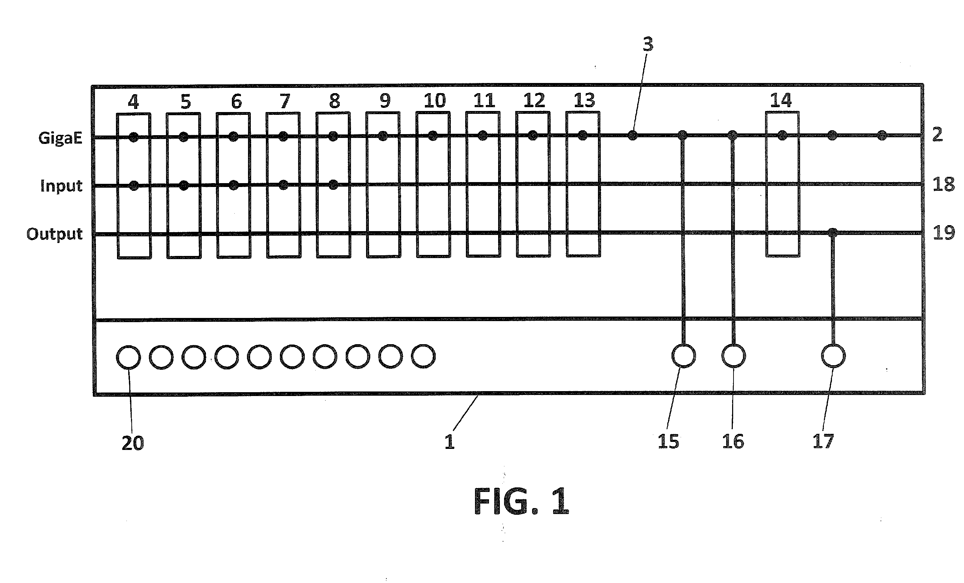

According to one of the embodiments of the present invention shown in Figure 1, the data bus (2) of the television headend (1) has 16 ports in which 10 modules (input modules (4, 5, 6, 7, 8), output modules (12, 13), and security modules (9, 10, 11)), a controller module (14) and two outputs (15, 16) have been connected in this example for the IP mode, there being 3 free ports remaining in this case. Should any change occur due to a failure or due to installing or uninstalling a module, the controller detects this and is reconfigured accordingly. For example, if an input module is eliminated either because it has been physically removed from the headend or because it no longer works, in solutions of the state of the art all the services that were being provided corresponding to the input signals acquired by said input module would be lost. The television headend of the present invention prevents this problem, being reconfigured in order to immediately acquire the same signals through a different input module. That is possible because all the input signals are available in the RF input bus for all the input modules.

The detection of a module can be done in two phases. At first, the base simply detects that there is a physical connection in a certain groove of the bus, and in a second phase the connected module reports what type of module it is (input, security or output module). After this time, the connected module is being managed as a resource of the type reported by the module itself.

As regards the loss of a module, in the case of removal for example, the base immediately reports the event to the controller so that it can reconfigure the headend accordingly.

If the module breaks down but does not loose IP connectivity, it reports its broken down state directly to the controller. However, if the broken down module loses IP connectivity with the controller during an established time period, for example one minute, the controller determines that the module is broken down and switches off the power in the groove in which the module is located.

The input signals coming from the available receiving means, as mentioned above, are in the RF input bus available for the input modules. Each of the input modules receives, for example, two digital terrestrial television signals (DTT 1 and DTT 2), which are treated independently and combined with other input signals, such as with signals received by satellite, for example. Out of all the input satellite signals that may be available, the controller module determines which it should combine with the digital terrestrial television signals depending on the services selected by the installer. Therefore, each of the signals in an input module can transport a DTT signal and another satellite signal in a combined manner. Once the installer has selected the services of interest, the controller manages how to combine satellite signals and DTT signals to enable covering all the selected services. Several input modules can be arranged to complete access to all the available services.

In the RF operating mode, signal flows coming from input modules or security modules are modulated and converted from the base frequency to the suitable frequency. The outputs of all the output modules are combined in a single output signal (RF).

Operation for the IP mode, which can be selected in the controller as an alternative to the RF output mode, comprises receiving multiplexed services in the input signals reaching the headend and transporting them in packets encapsulated in IP signals. When the input modules receive the signals from the input bus, they put them in packets and instead of sending them to an output module (so that they can be frequency-converted once again into analog signals and sent to the output, as occurs in the RF output mode), send them to the controller and they are directly sent to the IP output (or outputs) of the television headend.

The security module can also be used for decrypting pay signals in IP mode for either being transmitted free-to-air directly from the headend, for example in a DVB-IP format, described in standard ETSI TS 102 034, or for being transmitted reencrypted under DRM (digital rights protection system) supported in the system in which the headend is located. In contrast, the output modules are not used in IP mode.

The television headend detects the resources available at the input, offering the installer the service offering which detects at the input so that the installer can select an output service guide and adapts to the available resources by means of a dynamic configuration. In the operation thereof, the television headend comprises functionalities such as the following for detecting the resources available (at the output, at the input and in the headend itself):
- The television headend detects the presence of the signals and/or cables connected to its input. For example, according to one of the embodiments of the invention, for the case of cables transporting satellite signals the presence thereof can be detected by sending a pulse and analyzing the rebound, which when detecting rebound it is determined that there is a connected cable. According to one of the embodiments of the invention, for the case of terrestrial signals the presence of a signal can be determined by means of detecting its signal strength.
- The headend also detects the polarity of the intermediate frequency satellite signals of the cables connected to the input of the television headend.
- The detection of the frequency channels in which there is signal for each of the connected cables transporting satellite signals. Given that the presence of a cable physically connected to the headend is recognized as mentioned above, an additional step for recognizing the transported signal may be necessary. A tuner detects the frequencies at which there is a signal for each polarity, which differentiates the different satellite receiving means having different polarities and obtains the necessary configuration parameters, such as the symbol rate, for example.

- Discovering services included in each detected signal (either DTT or satellite signal). To that end, it demodulates the channels in the detected frequencies and decodes the content tables of the detected input signals. All the services available in the different input signals received at the input of the television headend of the present invention are thereby identified in order to show them to the installer as an available TV and radio service offering.
- Detection of the modules connected to the data bus and identification of their address in the data bus (for example, IP address). The headend (its base) reports the location of each of the physically connected modules by assigning addresses depending on the port of the data bus to which they have been connected, regardless of whether or not there is IP connectivity.
- Detection of free output channels for the case in which the controller is configured in RF mode. The output of the headend is connected with the next piece of equipment with which it is to be combined, and by means of a frequency scan the headend characterizes the resources available at the output (e.g. free frequencies) in order to suitably configure the services selected by the installer and take them to suitable frequencies.

According to one of the embodiments, the power bus or rail common to all the modules of the television headend performs a startup in an orderly manner by scaling the power of each module in order to avoid experiencing voltage peaks that may damage the headend. In other words, it does not start powering all the modules at the same time, but rather it starts powering them one at a time in an orderly manner.

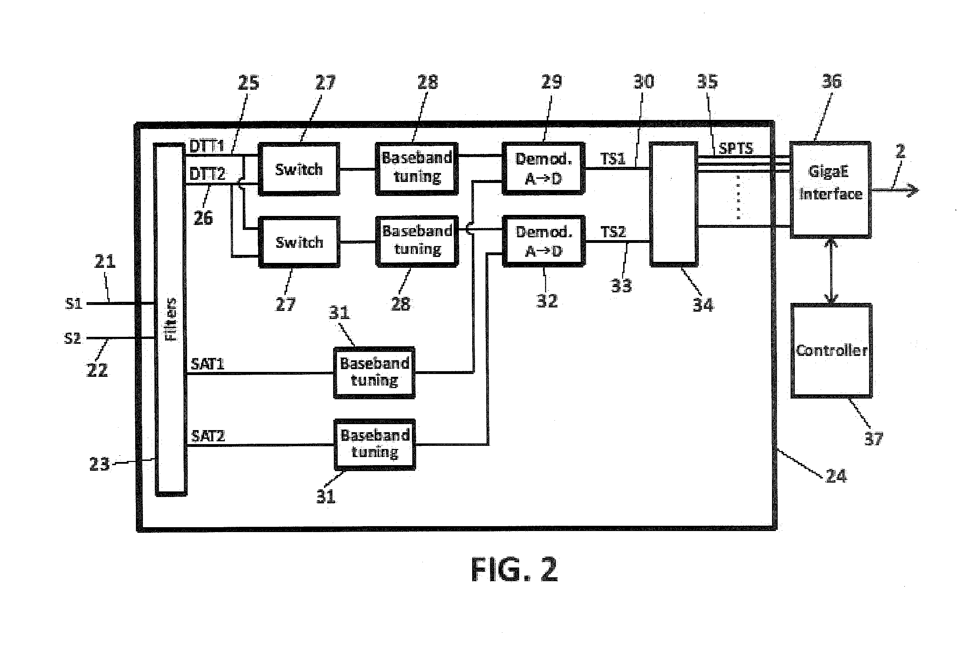

Figure 2 illustrates in detail an input module (24), where the input signals of the headend S1 (21), S2 (22) are filtered in a filter (23) separating DTT signals from satellite signals. The two inputs of the module receive two independent signals, for example a first DTT1 signal (25) transmitted in DVB-T, and a second high definition DTT2 signal (26) transmitted in DVB-T2, or, for example, Spanish DTT, which has about 14 channels with a multitude of TV services, can be received through the first DTT signal, and French TNT, which in turn contains n TV channels with m TV radio and data services, can be received through the second DTT2 signal. Said inputs are connected to an RF switch (27) which will allow selecting one or the other and taking it to a frequency tuner (28) which places the desired channel at an intermediate frequency and delivers it to a demodulating module (29) which also converts analog signals to digital and produces a transport stream TS1 (30) as output. Said transport stream also includes the part of the satellite signal filtered in the filter (23) and tuned in baseband (31) before introducing it in the demodulating module (29).

The other branch corresponding to the second available input signal works exactly the same way and a transport stream TS2 (33) is also obtained at the output of the demodulating module (32) as the product of combining the packets of all the services comprised in the signals involved.

Then a transport stream (35) is generated (34) for each of the services (for example, an SPTS, Single Program Transport Stream). The generated streams are injected (36) by the input module into the data bus (2), where they head (according to the address put in them by the controller module (37)) towards either a security module or else towards an output module (according to the RF operating mode).

The satellite signals used as input of the input module are required by the demodulating module, at any one of the two available inputs, depending on the services previously selected by the installer. For example, if the controller module wants to acquire satellite signal SAT4, it sends an instruction to the input module to acquire, through one of its inputs, said satellite signal SAT4, and accordingly, the input module sends a command to the base of the headend through the demodulating module to display in its input satellite signal SAT4. The command is sent by a return channel through the RF connector itself of the input module through which SAT4 is to be received.

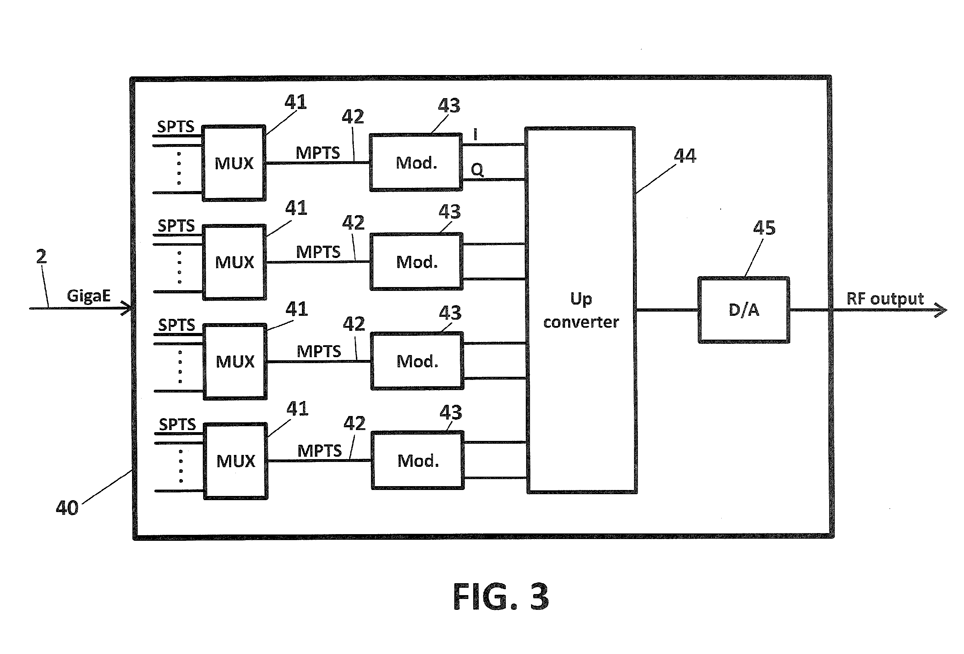

Figure 3 illustrates in detail the output of the headend and an output module (40), where SPTS streams (35) coming from input modules or security modules (for example, if the service had to be decrypted) are received through the data bus (2). The output module has multiplexers (41) for organizing multiplex channels (42) with all the received services (MPTS, Multiple Program Transport Stream). The multiplex of the output modules are then modulated in a COFDM modulator (DVB-T output) or QAM modulator (DVB-C output) (43) and delivered to an upconverter module (44) to convert the signals from the base frequency to the suitable frequency. The suitable frequencies to which each signal is to be converted is determined by the controller module which, in communication with the output modules, indicates which are the available frequencies after evaluating the resources available at the output of the television headend. For example, assuming a quadruple output module, it is detected in the system that channels C23, C31 and as many others are taken, so the controller would assign channel C21 (the first available in UHF for DTT), channel C22, channel C24 (because C23 is taken) and channel C25 to the output module. Finally, a digital-analog converter block (45) converts the output signal from digital to analog, thereby obtaining the RF signals corresponding to the digital modulations previously performed (COFDM channel or QAM channel). The outputs of all the output modules are combined in a single output signal (RF) (46).

Although the security modules can develop other functions, they primarily perform the encryption/decryption function that some payment services require. The SPTS streams or signals injected into the data bus by the input modules are managed by the controller module by means of the interface of the data bus and those corresponding to services that require decoding or decryption are sent to a security module, whereas those corresponding to services that do not require being decoded are sent directly to the output modules. Each of these SPTS streams or signals corresponding to services or programs that require being decoded go through a multiplexor, implemented for example in an FPGA card, to generate an MPTS signal, comprising a transport stream with all the services or programs to be decrypted. This MPTS signal is introduced in a conditional access module or CAM of the security module which decodes the signals according to the configuration received from the controller module.

In the case of systems for individual use, payment services are usually decrypted in the user terminal, which is provided with an access card for that purpose. However, in the case of communal systems, as in the case of hotels, for example, payment services can be decrypted in the headend (with the suitable access card), in the security module, as described above, and then the signal can be distributed to all the users that can now access it without needing an individual access card.

The communal distribution of multimedia services can be vulnerable to manipulation by other people, making additional protection of the content desirable (particularly if they are payment services) to prevent unauthorized access thereto ("pirating") by others, so according to one of the embodiments of the present invention security modules applying a certain level of encryption on certain signals are contemplated to precisely prevent their free-to-air distribution in a communal system, such as for example hotels or similar systems.

Any service can be encrypted, but the advantages are more evident for payment services because once the headend has decoded a payment service, when it is a system in a hotel or the like, the risk of the signal being pirated by others in the case of being distributed free-to-air is high. Security modules can prevent this by adding an encryption to these signals carrying payment services, so that they are distributed in encrypted form and are only accessible from terminals (television sets of each hotel room, for example) that have been loaded with a certain password.

The controller module is connected in one of the free ports of the data bus, through which it performs necessary communications with the rest of the modules and can send control traffic. It comprises a microprocessor interacting with the interface of the data bus and traduces the selections of the installer through a control and configuration interface, which can be implemented in various ways, such as a web configuration interface, for example. Other embodiments also contemplate the installer directly accessing it by means of a PC or by means of WiFi access. The controller module performs two fundamental recognition actions, one at the input of the headend and the other at the output. On one hand, it characterizes the system by identifying the modules connected at all times and recognizing which cables are connected as well as the signals available at the input and the services they transport. To obtain the service guide, the controller module has access to all the input signals captured by the receiving means (for example, antennas), which are connected by cable to the connectors of the television headend. Through a tuner and a demodulator, it extracts the information necessary for identifying the available services, which will be offered to the installer, for example, by means of the web configuration interface so that they can make the selection of services and configure, according to said selection, the connections of the input modules with the suitable input signals.

For example, from the entire list of services that the controller has identified, the installer selects 12 DTT multimedia services, 6 multimedia services provided by a first satellite and 4 other multimedia services provided by a second satellite. The headend configures the input modules to acquire and demodulate the signals corresponding to those 22 services (DTT, first satellite and second satellite services), ignoring the rest of the services available at the input, because at that time the installer is not interested in them (this will be done in a single input module or in several input modules, in that case, the controller will distribute the chosen services among them, such that each module acquires and demodulates a certain number of services). The acquired signals are processed to separately extract each of the services and the controller manages to get each of the services sent directly to the output modules or else to the security modules, depending on whether or not they need the additional processing of the security module. For example, 3 DTT services and 2 services provided by the first satellite correspond to payment services, so the controller sends them to the security module before sending them to the output modules. Finally, the 22 channels reach the output modules.

Since there are usually several different services in one and the same input signal (for example, a multiplex), sometimes when demodulating a signal to obtain one of the chosen services, services that have not been chosen sharing the same multiplex are also obtained. In these cases, in one embodiment the controller warns the installer that there are certain services that have not been chosen, but that they can be obtained without using up too many resources (because they share a multiplex with the chosen services), in case the installer is interested in selecting them (to offer end users more services, using up the same resources).

On the other hand, at the output of the headend, the controller module detects the available resources by performing a frequency scan. In many cases, the output of the headend is combined with other equipment (for example, another antenna); in those cases, to suitably manage resources and distribute frequencies, the controller module is connected to the output and after tuning the frequencies where there is a signal, performs demodulation to know exactly which resources it can use and accordingly configure the output modules, particularly the upconverter, which converts each of the services or channels in the suitable frequency.

Continuing with the preceding example, the headend has to put the 22 services selected by the installer in the suitable frequencies. Once it has evaluated the frequency channels that are taken at the output by other broadcast means, as discussed above, the headend manages the available resources in an intelligent manner to optimize them and distribute them among the output services required by the installer. Therefore, the 22 services selected in the available frequencies that allow assuring the best quality (that there is no interference with other services) for each of them will be placed at the output.

Additionally, in this process the controller module can also supervise the output signals of the television headend itself and analyze their quality. Depending on the measured quality, the controller module adjusts the configuration of the modules, for example re-adjusting the frequencies in the upconverter in order to relocate the services at higher or lower frequencies, improving their quality.

Some preferred embodiments of the invention are described in the dependent claims which are included below.

In this text, the word "comprises" and variants thereof (such as "comprising", etc.) must not be interpreted in an excluding manner, i.e., they do not exclude the possibility that what has been described may include other elements, steps, etc.

The description and the drawings simply illustrate the principles of the invention. Therefore, it must be observed that persons skilled in the art may devise several arrangements which, though not described or shown explicitly herein, represent the principles of the invention and are included within the scope thereof. Furthermore, all the examples described herein are provided primarily for pedagogical reasons to help the reader understand the principles of the invention and the concepts provided by the inventor/inventors to improve the art, and must be considered to be non-limiting with respect to such examples and conditions specifically described. Furthermore, everything herein described in relation to the principles, aspects and embodiments of the invention, as well as the specific examples thereof, cover equivalencies thereof.

Although the present invention has been described in reference to specific embodiments, persons skilled in the art must understand that the foregoing and various other changes, omissions and additions to the form and detail thereof can be done without departing from the scope of the invention as defined by means of the following claims.

## Claims

1. Configurable television headend receiving multimedia service signals at its input, the headend comprising:
- a plurality of connectors for receiving input signals;
- at least one input module which receives, through a first RF bus, input signals provided by the plurality of connectors, demodulates said signals, converts them to digital format and offers at its output one signal for each of the multimedia services;
- a data bus connecting all the modules of the headend;
- a headend resource management controller module connected with the at least one input module by means of the data bus, including a processor configured for:
∘ extracting identification information about each of the multimedia services;
∘ showing a list of the identified multimedia services to a user by means of a user interface;
∘ receiving, through user interaction with the user interface, a selection of said multimedia services;
∘ determining the input modules connected in the headend and their availability;
∘ indicating to each of the connected input modules the input signals to be acquired depending on the availability of said modules and according to the multimedia services selected by the user;
∘ detecting changes in availability of any module connected to the headend;
∘ dynamically modifying the configuration of the headend depending on changes in availability detected and indicating to each of the connected input modules the input signals to be acquired depending on changes in availability;
∘ detecting the resources available at the output of the headend; and
∘ sending to the output of the headend the multimedia services selected depending on the detected resources available at the output;
- a power bus providing power to all the modules of the headend.

2. Headend according to the preceding claim, which further comprises at least one security module connected with the at least one input module through the data bus, for encrypting/decrypting the signals corresponding to certain services received through the data bus, and where the processor of the controller module is furthermore configured for detecting the security modules connected in the headend and their changes in availability so as to command the sending of said signals to one security module or another depending on their availability.

3. Headend according to any of the preceding claims, which further comprises at least one output module connected to the data bus, where the at least one output module is configured for frequency-modulating and shifting the signals of the services received depending on the detected resources available at an RF output of the headend by the controller module, and where the processor of the controller module is furthermore configured for detecting the output modules connected in the headend and their changes in availability so as to command the sending of signals coming from either the input modules or else from the security modules to one output module or another, depending on their availability, through the data bus.

4. Headend according to claim 3, which comprises a plurality of output modules connected by a second RF bus and an RF combiner combining the signals converted by the plurality of output modules to distribute a single signal to the output of the headend.

5. Headend according to any of the preceding claims, which further comprises at least two output connectors for IP-type signals and an output connector for RF-type signals.

6. Headend according to any of the preceding claims, where the initial powering provided by the power bus for each of the modules is done step-wise, module by module.

7. Headend according to any of the preceding claims, where extracting the identification information about each of the multimedia services comprises tuning and demodulating all the input signals received.

8. Headend according to any of the preceding claims, where detecting the resources available at the output of the television headend is performed by means of a tuning module configured for performing a frequency scan at the output of the headend.

9. Headend according to any of the preceding claims, where the user interface is a web configuration interface that allows a user to configure the television headend remotely.

10. Headend according to any of the preceding claims, where the input signals of the headend are terrestrial digital television or radio signals or satellite signals, signals over IP, cable signals or any other type of signal with DVB-T, DVB-T2, DVB-C, DVB-S, DVB-S2, DVB-IP formats or any other format used for broadcasting multimedia signals.

11. Method for configuring and managing television headend resources receiving multimedia service signals at its input, the method comprising the steps of:
a) receiving multimedia service signals;
b) tuning and demodulating the received signals for extracting identification information about the received multimedia services;
c) displaying a list containing all the identified multimedia services by means of a user interface;
d) a user selecting a subset of multimedia services from the list displayed by means of the user interface;
e) receiving the selection of services in a controller module;
f) determining the input modules connected in the headend and their availability;
g) sending from the controller module to each of the input modules connected by means of a data bus a command to acquire certain input signals depending on the availability of said modules and the services selected in step d);
h) detecting changes in availability of any module connected to the headend and dynamically modifying the configuration of the headend according to the changes in availability, indicating to each of the connected input modules the input signals to be acquired depending on changes in availability detected;
i) demodulating the acquired signals, converting them to digital format, and offering a signal for each of the multimedia services as output of the at least one input module;
j) detecting the resources available at the output of the television headend;
k) sending to the output of the headend the multimedia services selected depending on the detected available resources.

12. Method according to claim 11, which further comprises detecting security modules connected in the headend, which encrypt/decrypt payment service signals, received through the data bus, and their changes in availability so as to command the sending of said signals through the data bus to one of the security modules depending on its availability.

13. Method according to any of claims 11-12, which further comprises detecting output modules connected in the headend and their changes in availability, and commanding the sending of signals coming from either the input modules or else from the security modules to one module or another, depending on their availability, through the data bus, and further comprises frequency-modulating and shifting the acquired signals depending on the detected resources available at the output of the headend by the controller module, in the output modules.

14. Method according to claim 13, which further comprises combining all the frequency-modulated and shifted signals to distribute a single signal to the output of the television headend.

15. Computer program **characterized in that** it comprises program coding means suitable for performing the steps of the method according to any of claims 11 to 14, when said program is executed in a general purpose processor, a digital signal processor, an FPGA, an ASIC, a microprocessor, a microcontroller, or any other form of programmable hardware.
